# EUROPEAN PATENT SPECIFICATION

(11) **EP 3 052 326 B1**
(45) Date of publication and mention of the grant of the patent: **15.11.2017**
(21) Application number: 14790341.3
(22) Date of filing: 29.09.2014
(51) Int. Cl.: B60C 25/138

(54) **SUPPORTING PLATE FOR SELF-CENTRING CHUCKS**
TRÄGERPLATTE FÜR SELBSTZENTRIERENDE SPANNFUTTER
PLAQUE DE SUPPORT POUR MANDRINS CONCENTRIQUES

(30) Priority: 30.09.2013 IT MO20130273
(43) Date of publication of application: 10.08.2016
(73) Proprietor: SICAM S.r.l., 42015 Correggio (RE) (IT)
(72) Inventor: DRESSLER, Bjoern, I-42015 Correggio (RE) (IT); CHIESSI, Michele, I-42015 Correggio (RE) (IT); VESCOVINI, Marco, I-42015 Correggio (RE) (IT)
(74) Representative: Luppi, Emanuele
(86) International application number: PCT/IB2014/064914
(87) International publication number: WO 2015/044918

(56) References cited:
- CH-A- 390 707
- CN-Y- 201 350 807
- GB-A- 191 011 495
- US-B1- 8 347 934

## Description

### Technical Field

The present invention relates to a supporting plate for self-centring chucks used in tyre-changing machines.

### Background Art

The use is known of tyre-changing machines for fitting and removing tyres to and from relative wheel rims.

Such tyre-changing machines comprise a base supporting a rim gripping and rotation unit, having a self-centring device, and a tool-carrying arm having a tool for removing and/or fitting the tyre.

The above device is a particular type of self-centring chuck also called "self-centring plate".

Such device is composed of a supporting plate for the rim, comprising grooves in which jaws run in a radial direction to lock the inner edge of the rim for its automatic centring.

The device is keyed on a shaft of the gripping unit, so that the rim, once locked, can be made to rotate to fit or remove the tyre, with the cooperation of the above-mentioned tool.

The known supporting plates can have different shapes, typically circular, square or "flower like" but, whatever the chosen shape, they are made from a single piece of metal.

Such plates are made up of a single metal slab with constant thickness, shaped by means of laser technology, in order to achieve enough structural strength to offset the stresses developed during the fitting/removal operations.

This aspect nevertheless makes known plates particularly heavy and therefore inconvenient to fit for operators.

Furthermore, known plates are expensive due to the fairly large quantity of raw material used.

Known supporting plates are described in US-B-8347934, CN-Y-201350807 and CH-A-390707.

### Description of the Invention

The main aim of the present invention is to provide a supporting plate for a self-centring chuck which, though lighter and cheaper than those of prior art, is at least equally resistant.

Within this aim, one object of the present invention is to provide a supporting plate for a self-centring chuck that can be manufactured in different shapes at lower costs compared to prior art.

Another object of the present invention is to provide a supporting plate for a self-centring chuck which can overcome the above mentioned drawbacks of the prior art in the ambit of a simple, rational, easy and effective to use as well as low cost solution.

The above mentioned objects are achieved by the present supporting plate for a self-centring chuck made according to claim 1.

### Brief Description of the Drawings

Other characteristics and advantages of the present invention will become better evident from the description of a preferred, but not exclusive, embodiment of a supporting plate for a self-centring chuck, illustrated by way of an indicative, but not limitative example in the accompanying drawings in which:
Figure 1 is an axonometric view of a tyre-changing machine on which the plate according to the invention is installed;

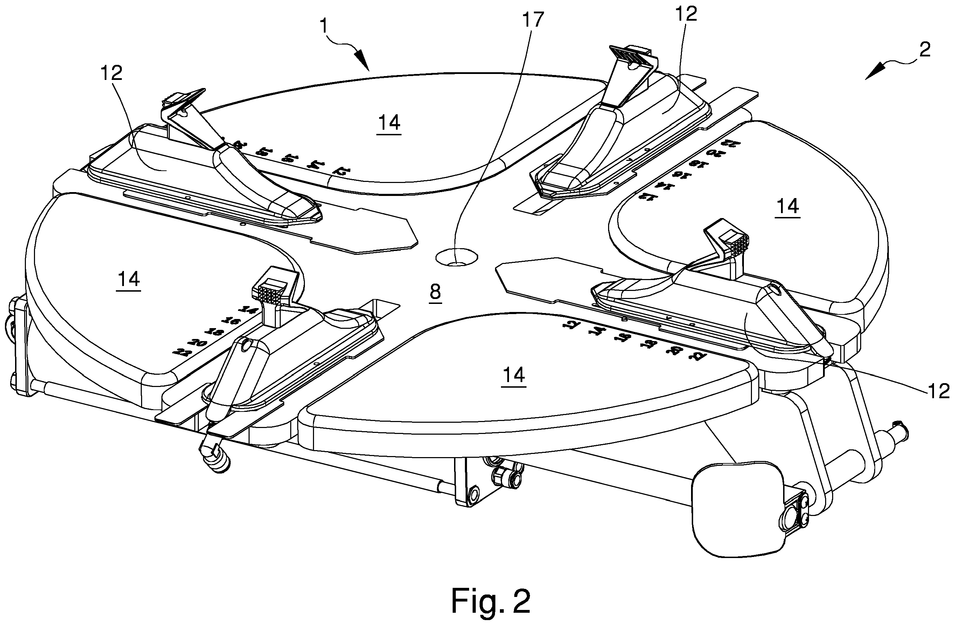

Figure 2 is an axonometric view of the chuck comprising the plate according to the invention;
Figure 3 is an axonometric view of the plate according to the invention; and
Figure 4 is an exploded axonometric view of the plate according to the invention.

### Embodiments of the Invention

With special reference to these figures, globally indicated by 1 is a supporting plate meant to be used in a self-centring chuck 2 of the type also called "self-centring chuck".

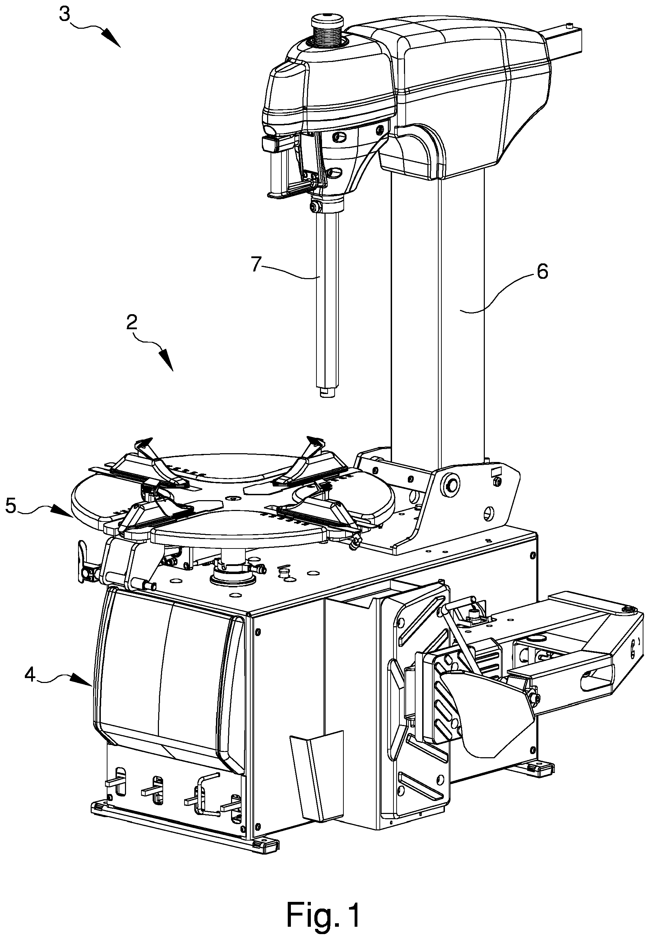

The chuck 2 which comprises the plate 1 of the invention is meant to support and lock the rim of a vehicle wheel on a tyre-changing machine 3 like the one shown in figure 1.

The function of plate 1 is to support the wheel locked or to be locked on the chuck 2 included in a gripping and rotation unit 5 installed on the machine 3. The machine 3 can be of the type having a base 4 on which the gripping unit 5 is mounted in front position, behind which unit 5 is a post 6 supporting a tool-carrying arm 7 which has the tool for fitting and removing tyres to and from a rim.

The plate 1 comprises a main element 8, in turn comprising a central coupling 9 which is keyed on the shaft of the gripping unit 5.

The main element 8 also comprises a plurality of spokes 10, each having a groove 11 wherein can slide respective jaws 12 of the chuck 2, to lock and automatically centre the rim, in ways in themselves known and which are not therefore detailed here.

In detail, the grooves 11 are full-thickness passages obtained centrally to each spoke 10, to define in this two prongs 13, i.e., a pronged shape.

Preferably, the main element 8 comprises a metal slab, made in a single body piece, which shapes the above-mentioned spokes 10 and which can have a constant thickness.

In the embodiment shown in the illustration, such slab 8 is cross-shaped and comprises four spokes 10 angularly equally distanced.

The plate 1 also includes a plurality of peripheral sectors 14, in the number of four in the illustrated example, with substantially planar extension. Each sector 14 is fixed to the main element 8 between two of its spokes 10, e.g., by welding, to define with it a single product.

The sectors 14 can be arranged in the plate 1 angularly equally distanced, substantially like the petals of a four-leafed clover or the like.

The sectors 14 are separated the one from the other from the main element 8 which is arranged in central position to define sort of quadrants occupied by respective sectors 14.

Preferably, each sector 14 is made of metal and in a single body piece.

The sectors 14 and the main element 8 are joined to one another in correspondence to respective perimeter edges 15, 16.

In detail, one or more perimeter edges 15 of the sectors 14 are fastened to the outer side edges 16 of the spokes 10 so as to fill the spaces between the prongs 13 of two consecutive spokes 10, defining an equal number of continuous angular portions of the plate 1.

Preferably, the plate 1 is interrupted only in correspondence of the grooves 11 and of a central hole 17 obtained in the central coupling 9 to accommodate the above shaft of the gripping unit 5.

Advantageously, the thickness of each of the sectors 14 is greater than that of the main element 8, e.g., it can be substantially double.

Nevertheless, the thickness of the sectors 14 does not coincide with the thickness of the walls of the lamina from which it is made.

In fact, each sector 14 comprises an upper contact side 18, meant to receive in support the rim, and a lower side 19 opposite the former and concave, like an overturned tray.

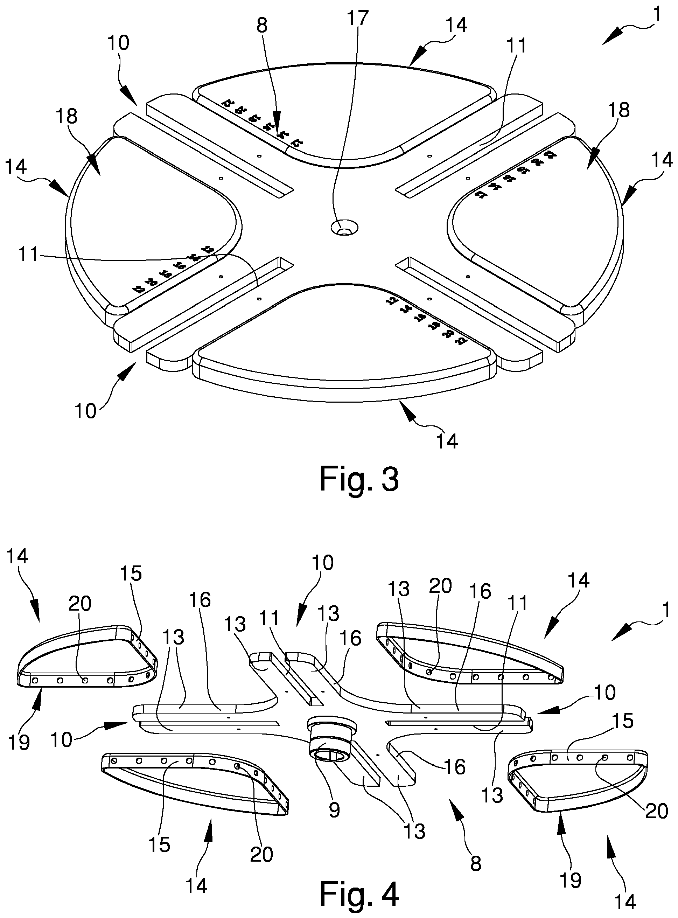

To be more precise, the lower side 19 has a concavity which is laterally contained in a perimeter frame, the width of which defines the thickness of the relative sector 14 and the outer surface of which identifies the above-mentioned edge 15 of the sector 14 (see figure 4).

Preferably, the frame extends crossways to the surface of the upper side 18, which is substantially flat.

Consequently, the difference appears clear between the thickness of the sector 14, which is the width of its side edge 15, and the thickness of the lamina or foil from which it is made.

The thickness of the sector 14 is greater than that of the main element 8, while the thickness of the lamina is smaller than this.

Advantageously, the invention provides a plate 1 having a main element 8 consisting of a rather thick slab, e.g., 15 mm like the known plates, which gives the plate 1 its structural strength and enables it to offset the stresses produced during use.

The thickness of the main element 8 can be between 10 and 20 mm and preferably, as said, is 15 mm.

On the other hand, the plate 1 is completed by the sectors 14 made from a lamina or sheet thinner than the main element 8 to which they are joined, to give the plate 1a lightness and cheapness far superior to those of the plates of prior art.

Despite this, the plate 1 of the invention is surprisingly more resistant to lateral bending stresses compared to known ones, because the thickness of the sectors 14, which are the components that withstand such bending, is greater than that of the slab from which the plates of prior art are made in their entirety.

The thickness of the sectors 14 can be between 25 and 35 mm and is preferably 30 mm.

In the preferred embodiment of the invention, each side edge 13 of the spokes 10 is joined to a respective edge 15 of a sector 14 in a median position with respect to the thickness of the latter.

The edges 15 of the sectors 14 can be lightened by the through holes 20.

In the shown embodiment, the sectors 14 have a generically triangular shape or approximately of circular sectors 14.

Nevertheless, the invention can envisage these having a shape with external angles, e.g., right angles, opposite the edges 15 which join to the main element 8, to define a plate 1 with a substantially quadrangular shape.

Or the sectors 14 can have a substantially V shape, to define "flower-shaped" plates.

Generally, the plates 1 of the invention can have all the shapes of known plates and others still, inasmuch as sectors 14 of the most different shapes can be fastened to the main element 8.

In fact, main elements 8 of the same shape can be used to make plates 1 of any shape, thus considerably cutting production costs.

It has in fact been ascertained that the invention provides a plate 1 for self-centring chucks of tyre changing machines which is lighter but as equally resistant as known plates, cheaper and which more effectively withstands lateral bending stresses.

## Claims

1. Supporting plate (1) for a self-centering chuck (2) meant to support and lock the rim of a wheel, comprising:
- a main element (8), comprising a plurality of spokes (10), each having a groove (11) wherein respective jaws (12) of said chuck (2) can slide; **characterised in that** the supporting plate further comprises:
- a plurality of peripheral sectors (14), each fixed to said main element (8) between two of said spokes (10).

2. Plate (1) according to claim 1, **characterized by** the fact that said main element (8) comprises a slab, made in a single body piece, which shapes said spokes (10).

3. Plate (1) according to claim 1 or claim 2, **characterized by** the fact that the thickness of each of said sectors (14) is greater than that of said central element.

4. Plate (1) according to claim 3, **characterized by** the fact that the thickness of said sectors (14) is substantially double with respect to that of said main element (8).

5. Plate (1) according to one or more of the preceding claims, **characterized by** the fact that each of said sectors (14) comprises an upper contact side, meant to receive in support said rim, and an opposite lower concave side.

6. Plate (1) according to one or more of the preceding claims, **characterized by** the fact that each sector (14) is shaped by a lamina, the thickness of which is smaller than that of said main element (8).

7. Plate (1) according to one or more of the preceding claims, **characterized by** the fact that said sectors (14) are joined to said main element (8) by welding.

8. Plate (1) according to one or more of the preceding claims, **characterized by** the fact that said sectors (14) and said main element (8) are joined in correspondence to respective perimeter edges (15, 16).

9. Plate (1) according to claim 8, **characterized by** the fact that each edge (16) of the spokes (10) of said main element (8) is joined to a respective edge (15) of one of said sectors (14) in a median position with respect to its thickness.

10. Plate (1) according to one or more of the preceding claims, **characterized by** the fact that said main element (8) is cross-shaped.

## Patentansprüche

1. Trägerplatte (1) für ein zur Abstützung und Verriegelung der Felge eines Rads bestimmtes selbstzentrierendes Spannfutter (2), umfassend:
- ein Hauptelement (8), das mehrere Speichen (10) umfasst, die jeweils eine Nut (11) aufweisen, in der jeweilige Backen (12) des Spannfutters (2) gleiten können;
**dadurch gekennzeichnet, dass** die Trägerplatte ferner Folgendes umfasst:
- mehrere Umfangssektoren (14), die jeweils am Hauptelement (8) zwischen zwei der Speichen (10) fixiert sind.

2. Platte (1) nach Anspruch 1, **dadurch gekennzeichnet, dass** das Hauptelement (8) eine einstückig hergestellte Platte umfasst, die die Speichen (10) bildet.

3. Platte (1) nach Anspruch 1 oder Anspruch 2, **dadurch gekennzeichnet, dass** die Dicke jedes der Sektoren (14) größer als die des mittleren Elements ist.

4. Platte (1) nach Anspruch 3, **dadurch gekennzeichnet, dass** die Dicke der Sektoren (14) bezüglich der des Hauptelements (8) im Wesentlichen das Doppelte beträgt.

5. Platte (1) nach einem oder mehreren der vorhergehenden Ansprüche, **dadurch gekennzeichnet, dass** jeder der Sektoren (14) eine obere Kontaktseite, die die Felge abstützend aufnehmen soll, und eine gegenüberliegende untere, konkave Seite umfasst.

6. Platte (1) nach einem oder mehreren der vorhergehenden Ansprüche, **dadurch gekennzeichnet, dass** jeder Sektor (14) durch eine Lamelle gebildet wird, deren Dicke kleiner als die des Hauptelements (8) ist.

7. Platte (1) nach einem oder mehreren der vorhergehenden Ansprüche, **dadurch gekennzeichnet, dass** die Sektoren (14) durch Schweißen mit dem Hauptelement (8) zusammengefügt sind.

8. Platte (1) nach einem oder mehreren der vorhergehenden Ansprüche, **dadurch gekennzeichnet, dass** die Sektoren (14) und das Hauptelement (8) entsprechend jeweiliger Umfangsränder (15, 16) zusammengefügt sind.

9. Platte (1) nach Anspruch 8, **dadurch gekennzeichnet, dass** jeder Rand (16) der Speichen (10) des Hauptelements (8) mit einem jeweiligen Rand (15) eines der Sektoren (14) an einer mittleren Stelle bezüglich seiner Dicke zusammengefügt ist.

10. Platte (1) nach einem oder mehreren der vorhergehenden Ansprüche, **dadurch gekennzeichnet, dass** das Hauptelement (8) kreuzförmig ist.

## Revendications

1. Plaque de support (1) pour un mandrin concentrique (2) destiné à supporter et bloquer la jante d'une roue, comprenant :
- un élément principal (8), comprenant une pluralité de rayons (10), comportant chacun une rainure (11) dans laquelle des mâchoires (12) respectives dudit mandrin (2) peuvent coulisser ; **caractérisée en ce que** la plaque de support comprend en outre :
- une pluralité de secteurs périphériques (14), fixés chacun audit élément principal (8) entre deux desdits rayons (10).

2. Plaque (1) selon la revendication 1, **caractérisée par le fait que** ledit élément principal (8) comprend un bloc, réalisé sous la forme d'une pièce d'un seul tenant, qui définit lesdits rayons (10) .

3. Plaque (1) selon la revendication 1 ou la revendication 2, **caractérisée par le fait que** l'épaisseur de chacun desdits secteurs (14) est supérieure à celle dudit élément central.

4. Plaque (1) selon la revendication 3, **caractérisée par le fait que** l'épaisseur desdits secteurs (14) est essentiellement égale au double de celle dudit élément principal (8).

5. Plaque (1) selon une ou plusieurs des revendications précédentes, **caractérisée par le fait que** chacun desdits secteurs (14) comprend un côté de contact supérieur, destiné à recevoir à des fins de support ladite jante, et un côté inférieur concave opposé.

6. Plaque (1) selon une ou plusieurs des revendications précédentes, **caractérisée par le fait que** chaque secteur (14) est réalisé à partir d'une lame, dont l'épaisseur est inférieure à celle dudit élément principal (8).

7. Plaque (1) selon une ou plusieurs des revendications précédentes, **caractérisée par le fait que** lesdits secteurs (14) sont raccordés audit élément principal (8) par soudage.

8. Plaque (1) selon une ou plusieurs des revendications précédentes, **caractérisée par le fait que** lesdits secteurs (14) et ledit élément principal (8) sont raccordés au niveau de bords périphériques (15, 16) respectifs.

9. Plaque (1) selon la revendication 8, **caractérisée par le fait que** chaque bord (16) des rayons (10) dudit élément principal (8) est raccordé à un bord (15) respectif de l'un desdits secteurs (14) dans une position médiane par rapport à son épaisseur.

10. Plaque (1) selon une ou plusieurs des revendications précédentes, **caractérisée par le fait que** ledit élément principal (8) est cruciforme.
